(19) Europäisches Patentamt
European Patent Office
Office européen des brevets

(11) **EP 1 294 215 B1**

(12) **EUROPÄISCHE PATENTSCHRIFT**

(45) Veröffentlichungstag und Bekanntmachung des Hinweises auf die Patenterteilung:
**14.03.2007  Patentblatt 2007/11**

(51) Int Cl.:
***H05B 39/04*** *(2006.01)*

(21) Anmeldenummer: **02015003.3**

(22) Anmeldetag: **04.07.2002**

(54) **Vorschaltgerät für mindestens eine elektrische Glühlampe, und Verfahren zum Betreiben solch eines Vorschaltgeräts**

Ballast for at least one incandescent lamp, and method for operating such a ballast

Ballast pour au moins une lampe à incandescence, et méthode pour commander un tel ballast

(84) Benannte Vertragsstaaten:
**AT BE BG CH CY CZ DE DK EE ES FI FR GB GR IE IT LI LU MC NL PT SE SK TR**

(30) Priorität: **18.09.2001  DE 10146030**

(43) Veröffentlichungstag der Anmeldung:
**19.03.2003  Patentblatt 2003/12**

(73) Patentinhaber: **Patent-Treuhand-Gesellschaft für elektrische Glühlampen mbH
81543 München (DE)**

(72) Erfinder: **Muehlschlegel, Joachim
82194 Groebenzell (DE)**

(74) Vertreter: **Raiser, Franz
Osram GmbH
Postfach 22 16 34
80506 München (DE)**

(56) Entgegenhaltungen:
**EP-A- 0 357 285          EP-A- 0 435 231
EP-A- 0 933 979          WO-A-01/69983
DE-A- 19 543 720**

**Beschreibung**

**Technisches Gebiet**

Die vorliegende Erfindung betrifft ein Vorschaltgerät für mindestens eine elektrische Glühlampe mit mindestens zwei Schaltelementen, die unter Bildung eines ersten Verbindungspunkts miteinander gekoppelt sind, einer Ansteuerschaltung mit mindestens einem Ausgang zur Ansteuerung der mindestens zwei Schaltelemente mit einem Ansteuersignal, das durch ein Tastverhältnis und eine Schaltfrequenz charakterisiert ist, und einem Eingang für ein Dimmsignal, und einem Leistungsübertrager, dessen Primärseite mit dem ersten Verbindungspunkt gekoppelt ist, wobei an dessen Sekundärseite die mindestens eine elektrische Glühlampe anschließbar ist. Sie betrifft überdies ein Verfahren zum Betreiben eines Vorschaltgeräts für mindestens eine elektrische Glühlampe, wobei das Vorschaltgerät umfaßt mindestens zwei Schaltelemente, die unter Bildung eines ersten Verbindungspunkts miteinander gekoppelt sind, eine Ansteuerschaltung mit mindestens einem Ausgang zur Ansteuerung der mindestens zwei Schaltelemente mit einem Ansteuersignal, das durch ein Tastverhältnis und eine Schaltfrequenz charakterisiert ist, und einem Eingang für ein Dimmsignal, sowie einen Leistungsübertrager, dessen Primärseite mit dem ersten Verbindungspunkt gekoppelt ist, wobei an dessen Sekundärseite die mindestens eine elektrische Glühlampe anschließbar ist, wobei bei dem Verfahren zunächst ein Dimmsignal an den Eingang der Ansteuerschaltung angelegt wird und anschließend mit der Ansteuerschaltung ein Ansteuersignal in Abhängigkeit des Dimmsignals erzeugt wird.

Die vorliegende Erfindung betrifft das Dimmen von elektrischen Glühlampen, die über einen sogenannten elektronischen Transformator angesteuert werden. Für die Steuerung eines derartigen elektronischen Transformators über ein digitales oder analoges Interface ist es notwendig, die Spannung an seinen Ausgangsklemmen über einen weiten Spannungsbereich einstellen zu können. Dabei ist es erforderlich, die Spannung insbesondere sehr genau einstellen zu können, so daß die für das Dimmen im sogenannten DALI-Standard vorgeschriebene Lichtflußkennlinie eingehalten wird und damit auch im gedimmten Zustand alle Lampen einer Gruppe von elektronischen Transformatoren gleich hell erscheinen. Das heißt, verschiedene elektronische Transformatoren, die verschiedene Glühlampen ansteuern, müssen auf ein Dimmsignal hin möglichst präzise dieselbe Ausgangsspannung bereitstellen. Dies ist nötig, da gerade im gedimmten Zustand Helligkeitsunterschiede besonders gut sichtbar sind. Für die zur Dimmung notwendige Ausgangsspannungseinstellung ist ein Pulsweitenverfahren (assymetrischer Dutycycle) besonders vorteilhaft, bei dem die Leistungsschalter in einer Halbbrücke alternierend schalten. Hierbei wird die Einschaltzeit des einen Schalters auf Kosten der Einschaltzeit des anderen Schalters verlängert. Bei diesem Verfahren bleibt die Schaltfrequenz konstant, nur die Einschaltverhältnisse der Schalter ändern sich. Ein solches Verfahren wird in der Schrift DE 195 43 720 (Johler) offenbart.

**Darstellung der Erfindung**

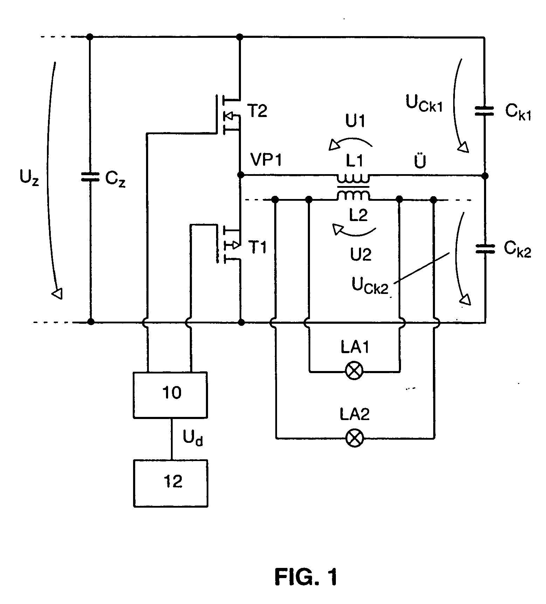

Figur 1 zeigt zwar ein Ausführungsbeispiel des erfindungsgemäßen Vorschaltgeräts, kann jedoch auch verwendet werden, um den Stand der Technik zu beschreiben: Die beiden Leistungsschalter sind in Figur 1 mit T1 und T2 bezeichnet und werden von einer Ansteuerschaltung 10 angesteuert, die ihrerseits an den Ausgang eines Dimmers 12 gekoppelt ist, wobei der Dimmer 12 ein Dimmsignal $U_d$ an die Ansteuerschaltung 10 anlegt. Die Versorgungsspannung der beiden Schaltelemente T1 und T2 ist die sogenannte Zwischenkreisspannung $U_Z$, die vorliegend an einem Kondensator $C_Z$ bereitgestellt wird. Der Verbindungspunkt VP1 der beiden Schaltelemente T1 und T2 ist mit der Primärseite L1 eines Übertragers Ü verbunden. Der andere Anschluß der Primärseite L1 des Übertragers Ü ist mit dem Verbindungspunkt zweier Koppelkapazitäten $C_{k1}$, $C_{k2}$ verbunden, die mit ihrer anderen Elektrode mit dem Kondensator $C_Z$ verbunden sind. An die Sekundärseite L2 des Übertragers Ü ist mindestens eine Glühlampe LA1, LA2 angeschlossen.

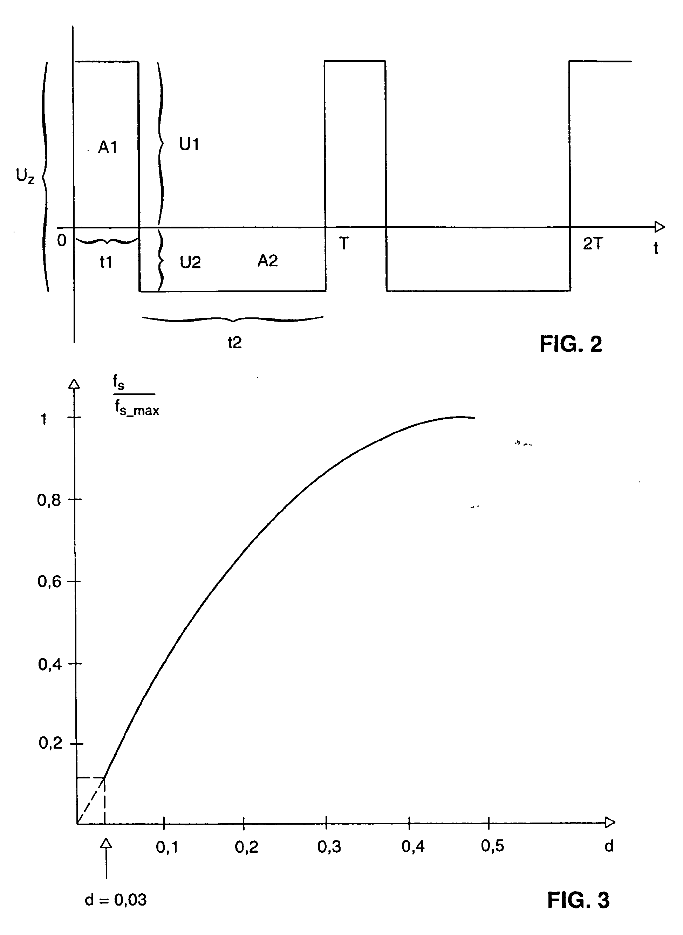

Figur 2 zeigt den Verlauf der Spannung U1 an der Primärseite L1 des Übertragers Ü, wobei das Tastverhältnis zwischen der Einschaltzeit t2 des oberen Schalters T2 und der Einschaltzeit t1 des unteren Schalters T1 so verändert ist, daß t1 < t2 ist.

Der Effektivwert der sekundärseitigen Ausgangsspannung $U_{2eff}$ berechnet sich zu:

$$U_{2eff} = \frac{U_Z}{N} \cdot \sqrt{d \cdot (1-d)}.$$

Dabei steht d für das Tastverhältnis, das heißt d = t1/T, wobei T= t1 + t2 die Periodendauer der primärseitigen Spannung U1 am Leistungsübertrager Ü bezeichnet, deren Kehrwert der Schaltfrequenz $f_S$ entspricht. $U_Z$ entspricht, wie bereits erwähnt, der Zwischenkreisspannung, N dem Windungszahlverhältnis des Leistungsübertrages Ü. Für d ist der Bereich 0 bis 0,5 zulässig.

Üblicherweise wird nun beim Dimmen bis auf einen minimalen Wert von ca. 1 % des maximalen Lichtstroms gedimmt. Dabei werden sehr kleine Tastverhältnisse erreicht, welche im Bereich d=0,03 bis 0,05 liegen. Die Einschaltzeit t1 wird dabei sehr klein. Damit verschiebt sich das Spektrum der Ausgangsspannung U2 drastisch in Richtung hin zu höheren Frequenzen. Die Spannung an den Ausgangsklemmen ist davon nur in geringem Maße betroffen, zumal der zusätzliche Spannungsabfall an der Übertragerstreuinduktivität durch entsprechende, aus dem Stand der Technik bekannte Schaltungsmaßnahmen kompensiert werden kann.

Ein besonderer Nachteil entsteht jedoch bei Verwendung eines Vorschaltgeräts zum Betreiben mehrerer Glühlampen. Durch die Verschiebung des Spektrums entsteht nämlich ein beträchtlicher induktiver Spannungsabfall auf den Zuleitungen zu den Glühlampen. Dieser Spannungsabfall kann bei kleinen Tastverhältnissen d bei üblichen Schaltfrequenzen von 30 kHz bis 50 kHz bis zu mehreren Volt betragen. Werden nun mehrere Glühlampen in Parallelschaltung von einem Vorschaltgerät betrieben, brennen sie daher je nach Ausführung der Lampenzuleitung, das heißt insbesondere nach der Induktivität der Lampenzuleitung, die wesentlich von der Länge der Lampenzuleitung bestimmt wird, mit deutlich sichtbaren Helligkeitsunterschied. Mit Bezug auf die erstgenannte Betriebsweise, bei der einzelne Glühlampen an eigenen Transformatoren getrieben werden, gilt dies ebenso, wenn diese über einen gemeinsamen digitalen Bus gemeinsam gedimmt werden.

Die Aufgabe der vorliegenden Erfindung besteht deshalb darin, ein gattungsgemäßes Vorschaltgerät sowie das gattungsgemäße Verfahren derart weiterzubilden, daß Helligkeitsunterschiede bei Betrieb mehrerer Glühlampen an einem derartigen Vorschaltgerät sowie bei Betrieb verschiedener Glühlampen mit verschiedenen elektronischen Transformatoren, die über einen gemeinsamen Bus gemeinsam gedimmt werden, weitestgehend zu vermeiden.

Die obige Aufgabe wird gemäß einem ersten Aspekt dadurch gelöst, daß die Ansteuerschaltung ausgebildet ist in Abhängigkeit des Dimmsignals das Tastverhältnis und die Schaltfrequenz des Ansteuersignals zu variieren.

Gemäß einem weiteren Aspekt wird die Aufgabe auch gelöst durch ein gattungsgemäßes Verfahren, bei dem in dem zweiten Schritt das Ansteuersignal durch Variieren der Schaltfrequenz und des Tastverhältnisses in Abhängigkeit der Dimmsignals erzeugt wird.

Diese Maßnahme ermöglicht eine erhebliche Verringerung der Schaltfrequenz, wodurch eine Verschiebung des Spektrums der Ausgangsspannung beim Dimmen deutlich reduziert oder sogar ganz vermieden werden kann. Weiterhin sind die Verluste bei gattungsgemäßen Schaltungen proportional zur Schaltfrequenz. Durch die Absenkung der Schaltfrequenz ergeben sich hierdurch bei der Erfindung weniger Verluste. Ein weiterer Vorteil im Hinblick auf die elektromagnetische Verträglichkeit entsteht dadurch, daß auf den Zuleitungen zu den elektrischen Glühlampen weniger hohe Frequenzanteile auftreten. Zudem kann ein kostengünstigerer Timer zur Realisierung der Impulse gewählt werden, da die Erzeugung schmaler Impulse technisch schwieriger zu realisieren ist und bei der vorliegenden Erfindung die Impulse breiter gewählt werden können. Durch die reduzierten Anforderungen an den Timer lassen sich daher die erfindungsgemäßen Vorschaltgeräte sehr kostengünstig realisieren.

Bei einer bevorzugten Ausführungsform ist die Ansteuerschaltung ausgelegt, bei der Variation des Tastsignals weiterhin die Versorgungsspannung für die zwei Schaltelemente und/oder den Strom durch die mindestens eine Glühlampe und/oder die Spannung auf der Sekundärseite des Leistungsübertragers zu berücksichtigen. Durch diese Maßnahme läßt sich das die Schaltelemente ansteuernde Signal noch besser optimieren im Hinblick auf den Wirkungsgrad des Leistungsübertragers.

Bevorzugt ist die Ansteuerschaltung ausgelegt, die Schaltfrequenz in Abhängigkeit des Tastverhältnisses zu variieren. Da Tastverhältnis und Schaltfrequenz aufeinander abgestimmt werden und eine oder mehrere relevanten Variablen bei der Definition des Tastverhältnisses berücksichtigt werden, ist dies eine besonders einfache Möglichkeit die dazu passende Schaltfrequenz festzulegen. Insbesondere braucht die Schaltfrequenz hierdurch nicht mehr separat berechnet zu werden, sondern kann, beispielsweise unter Verwendung einer Look-Up-Table, passend zum Tastverhältnis abgelesen werden.

Erfindungsgemäß ist die Ansteuerschaltung ausgebildet, bei einem Dimmsignal, das mit einer niedrigeren von dem Leistungsübertrager zu übertragenden Leistung korreliert ist, die Schaltfrequenz zu verringern im Vergleich zur Schaltfrequenz bei einem Dimmsignal, das mit einer höheren von dem Leistungsübertrager zu übertragenden Leistung korreliert ist.

Bevorzugt ist die Ansteuerschaltung ausgebildet, bei einem Dimmsignal, das mit der maximal vom Leistungsübertrager zu übertragenden Leistung korreliert ist, ein Ansteuersignal zu erzeugen, bei dem die Schaltfrequenz maximal ist, und bei einem Dimmsignal, das mit der minimal vom Leistungsübertrager zu übertragenden Leistung korreliert ist, ein Ansteuersignal zu erzeugen, bei dem die Schaltfrequenz minimal ist.

Bevorzugt wird die minimale Schaltfrequenz des Ansteuersignals derart bestimmt, daß noch keine Sättigung im Leistungsübertrager auftritt. Die Ansteuerschaltung kann zur Vereinfachung der Steuerung ausgelegt sein, die Schaltfrequenz des Ansteuersignals in Abhängigkeit des Dimmsignals kontinuierlich, stufenweise und/oder entsprechend einem abschnittsweise linearisierten Kurvenzug zu variieren.

Die Ansteuerschaltung kann auch ausgelegt sein, die Schaltfrequenz des Ansteuersignals derart zu verringern, daß die Spannungszeitfläche am Leistungsübertrager im wesentlichen konstant bleibt. Wenn nun die Spannungszeitfläche hierbei so gewählt wird, so daß der Übertrager bei maximaler Ausgangsleistung mit optimalem Wirkungsgrad betrieben wird, wird ein Betrieb der einen oder mehreren Glühlampen mit sehr geringen Verlusten im Vorschaltgerät ermöglicht.

Die Spannungszeitfläche kann jedoch auch derart gewählt werden, daß der Leistungsübertrager an der Sättigungsgrenze betrieben wird. Hierdurch fallen die Frequenzen im Ausgangsspektrum minimal aus, so daß die Ergebnisse im Hinblick auf EMV, zu wählendem Timer und Leitungsverluste minimal ausfallen.

Das Vorschaltgerät kann zwei Schaltelemente in Halbbrückenanordnung oder vier Schaltelemente in Vollbrückenanordnung umfassen.

Weitere vorteilhafte Ausführungsformen ergeben sich aus den Unteransprüchen.

**Beschreibung der Zeichnungen**

Ein Ausführungsbeispiel wird im folgenden unter Hinweis auf die beigefügten Zeichnungen näher beschrieben. Es stellen dar:

Figur 1 in schematisierter Darstellung einen Schaltplan eines erfindungsgemäßen Vorschaltgeräts;

Figur 2 den Verlauf der Spannung an der Primärseite des Leistungsübertragers; und

Figur 3 den Verlauf des Verhältnisses aus der einzustellenden Schaltfrequenz $f_S$ zur maximalen Schaltfrequenz $f_{S\_max}$, das heißt der Schaltfrequenz bei einem Tastverhältnis d = 0,5, über dem Tastverhältnis d.

Bei einem Ausführungsbeispiel der Erfindung wird die Schaltfrequenz $f_S$ so eingestellt, daß bei maximaler Ausgangsleistung und damit bei maximalem Tastverhältnis $d_{max}$ = 0,5 die Schaltfrequenz maximal ist, das heißt $f_S = f_{S\_max}$. Bei maximaler Ausgangsleistung arbeitet der Leistungsübertrager Ü somit bei optimalem Wirkungsgrad. Wird die Ausgangsspannung und damit die Ausgangsleistung durch Verringerung des Tastverhältnisses d verringert, so wird erfindungsgemäß die Schaltfrequenz $f_S$ ebenfalls verringert. Die Schaltfrequenz $f_S$ wird dabei jedoch nur soweit abgesenkt, daß noch keine Sättigung im Leistungsübertrager Ü entsteht.

Die minimal zulässige Schaltfrequenz $f_S$, normiert auf die maximale Schaltfrequenz $f_{S\_max}$ als Funktion des Tastverhältnisses d, bei dem gerade noch keine Sättigung des Leistungsübertragers Ü tritt, ergibt sich zu:

$$\frac{f_s}{f_{s\_max}} = 4 \cdot d(1-d)$$

Diese Abhängigkeit ist in Figur 3 dargestellt. Hierbei ist, wie bereits erwähnt, $f_{S\_max}$ die maximale Schaltfrequenz, die bei maximalem Tastverhältnis $d_{max}$= 0,5 erreicht wird, und bei der bei maximaler Zwischenkreisspannung $U_{Z\_max}$ gerade noch keine Sättigung auftritt. Die obige Formel leitet sich wie folgt her:

Die Summe der Spannungen an den Koppelkondensatoren $C_{k1}$, $C_{k2}$ gibt die Zwischenkreisspannung $U_Z$, somit $U_{Ck1} + U_{Ck2} = U_Z$.

Mit Bezug auf Figur 2 sind die Spannungszeitflächen A1 und A2 an der Primärwicklung des Leistungsübertragers Ü (im eingeschwungenen Zustand) gleich groß, da durch die Koppelkondensatoren $C_{k1}$, $C_{k2}$ nur Wechselstrom fließt. Somit gilt:

$$A1 = U1 \cdot t1 = A2 = U2 \cdot t2.$$

Wie bereits eingangs erwähnt, gilt weiterhin

$$d = \frac{t1}{T}; \quad T = t1 + t2; \quad f_s = \frac{1}{T} \cdot$$

Eine Möglichkeit die Schaltfrequenz $f_s$ anzupassen, besteht darin, die Schaltfrequenz kontinuierlich derart zu verringern, daß die Spannungszeitfläche am Leistungsübertrager Ü konstant auf dem Wert $A_{Soll}$ bleibt. $A_{Soll}$ kann dabei so gewählt werden, daß der Übertrager Ü bei maximaler Ausgangsleistung mit optimalem Wirkungsgrad betrieben wird. $A_{Soll}$ kann jedoch auch so gewählt werden, daß der Leistungsübertrager Ü an der Grenze zur Sättigung betrieben wird. In beiden Fällen ergibt sich ein Verlauf $f_S$ / $f_{S\_max}$ nach der obigen Formel, wobei die Normierungsfrequenz $f_{S\_max}$ bestimmt, ob der Leistungsübertrager bei optimalem Wirkungsgrad oder an der Grenze zur Sättigung betrieben wird.

Eine andere Möglichkeit, die Schaltfrequenz $f_S$ an das Tastverhältnis d anzupassen, besteht darin, die Schaltfrequenz $f_S$ stufenförmig abzusenken. Wird bei der Verringerung der Ausgangsleistung ein bestimmter Wert des Tastverhältnisses d unterschritten, so wird die Schaltfrequenz $f_S$ auf den zugehörigen Wert abgesenkt. Die Anpassung der Schaltfrequenz $f_S$ kann auch in der Art erfolgen, daß der Verlauf nach der obigen Gleichung durch Geradenstükke angenähert wird, beispielsweise durch abschnittsweise Linearisierung.

Die Erfindung kann bei Realisierung des Vorschaltgeräts mit einem Halbbrückenwandler ebenso wie mit einem Vollbrückenwandler angewendet werden.

Die erhebliche Verringerung der Schaltfrequenz durch die erfindungsgemäße Maßnahme soll an einem Beispiel dargestellt werden:

Bei einem Tastverhältnis von d = 0,03, was einer Dimmung auf ca. 1 % des maximalen Lichtstroms entspricht, ergibt sich nach der obigen Gleichung eine Absenkung der Schaltfrequenz $f_S$ auf 4 x 0,03 x (1-0,03) x 100 % =11,6 % der maximalen Schaltfrequenz $f_{S\_max}$, ohne daß der Leistungsübertrager Ü in den gesättigten Betrieb übergeht. Andererseits kann hier der Leistungsübertrager bei einem Tastverhältnis d = 0,5, das heißt bei maximaler Ausgangsleitung (bezogen auf eine feste Zwischenkreisspannung $U_Z$) bei optimalem Wirkungsgrad betrieben werden.

Die Erfindung kann mit einem Mikro-Controller ohne zusätzlichen Schaltungsaufwand oder mit einer geeigneten analogen oder digitalen Schaltung vorgenommen werden. Bei alternativen Ausführungsformen kann eine Normierung der zu wählenden Schaltfrequenz $f_S$ auch auf andere Kriterien durchgeführt werden, zum Beispiel auf minimale Verluste im Übertrager, bzw. optimale thermische Verhältnisse. Hierbei ist zu berücksichtigen, daß sich eine optimale Übertragerausnutzung nahe dessen thermischer Grenze ergibt.

Im Hinblick auf akustische Effekte kann es sinnvoll sein, das Verhältnis $f_S$ zu $f_{S\_max}$ auf minimal 0,4 zu begrenzen.

**Patentansprüche**

1. Vorschaltgerät für mindestens eine elektrische Glühlampe mit

   - mindestens zwei Schaltelementen (T1, T2), die unter Bildung eines ersten Verbindungspunkts (VP1) miteinander gekoppelt sind,
   - einer Ansteuerschaltung (10)
   mit mindestens einem Ausgang zur Ansteuerung der mindestens zwei Schaltelemente (T1, T2) mit einem Ansteuersignal, das durch ein Tastverhältnis (d)
   welches durch das Verhältnis einer Eischaltzeit (t1) eines der Schaltelemente (T1, T2) zur Summe von Einschaltzeiten (T) der Schaltelemente (T1, T2) definiert ist
   und eine Schaltfrequenz ($f_S$) charakterisiert ist, und einem Eingang für ein Dimmsignal ($U_d$), und
   - einem Leistungsübertrager (Ü), dessen Primärseite (L1) mit dem ersten Verbindungspunkt (VP1) gekoppelt ist, wobei an dessen Sekundärseite (L1) die mindestens eine elektrische Glühlampe (LA1; LA2) anschließbar ist,

   **dadurch gekennzeichnet,**
   **daß** die Ansteuerschaltung (10) ausgebildet ist, in Abhängigkeit des Dimmsignals ($U_d$) das Tastverhältnis (d) und die Schaltfrequenz ($f_S$) des Ansteuersignals zu variieren
   und **daß** die Ansteuerschaltung (10) ausgebildet ist, bei einem Dimmsignal ($U_d$), das mit einer niedrigeren von dem Leistungsübertrager (Ü) zu übertragenden Leistung korreliert ist, die Schaltfrequenz ($f_S$) zu verringern im Vergleich zur Schaltfrequenz ($f_S$) bei einem Dimmsignal ($U_d$), das mit einer höheren von dem Leistungsübertrager zu übertragenden Leistung korreliert ist.

2. Vorschaltgerät nach Anspruch 1,
   **dadurch gekennzeichnet,**
   **daß** die Ansteuerschaltung (10) ausgelegt ist, bei der Variation des Tastsignals (d) weiterhin die Versorgungsspannung ($U_Z$) für die zwei Schaltelemente (T1, T2) und/oder den Strom durch die mindestens eine Glühlampe (LA1) und/oder die Spannung (U2) auf der Sekundärseite des Leistungsübertragers (Ü) zu berücksichtigen.

3. Vorschaltgerät nach einem der vorhergehenden Ansprüche,
   **dadurch gekennzeichnet,**
   **daß** die Ansteuerschaltung (10) ausgebildet ist, bei einem Dimmsignal ($U_d$), das mit der maximal vom Leistungsübertrager (Ü) zu übertragenden Leistung korreliert ist, ein Ansteuersignal zu erzeugen, bei dem die Schaltfrequenz ($f_S$) maximal ist, und bei einem Dimmsignal ($U_d$), das mit der minimal vom Leistungsübertrager (Ü) zu übertragenden Leistung korreliert ist, ein Ansteuersignal zu erzeugen, bei dem die Schaltfrequenz ($f_S$) minimal ist.

4. Vorschaltgerät nach einem der vorhergehenden Ansprüche,
   **dadurch gekennzeichnet,**
   **daß** die minimale Schaltfrequenz ($f_S$) des Ansteuersignals derart bestimmt ist, daß noch keine Sättigung im Leistungsübertrager (Ü) auftritt.

5. Vorschaltgerät nach einem der vorhergehenden Ansprüche,
   **dadurch gekennzeichnet,**
   **daß** die Ansteuerschaltung (10) ausgelegt ist, die Schaltfrequenz ($f_S$) des Ansteuersignals in Abhängigkeit des Dimmsignals ($U_d$) kontinuierlich, stufenweise und/oder entsprechend einem abschnittsweise linearisierten Kurvenzug zu variieren.

6. Vorschaltgerät nach einem der vorhergehenden Ansprüche,
   **dadurch gekennzeichnet,**
   **daß** die Ansteuerschaltung (10) ausgelegt ist, die Schaltfrequenz ($f_S$) des Ansteuersignals derart zu verringern, daß die Spannungszeitfläche (A1; A2; $A_{Soll}$) am Leistungsübertrager (Ü) im wesentlichen konstant bleibt.

7. Vorschaltgerät nach Anspruch 6,
   **dadurch gekennzeichnet,**
   **daß** die Spannungszeitfläche (A1; A2; $A_{Soll}$) derart gewählt ist, daß der Leistungsübertrager (Ü) bei maximal zu übertragender Leistung mit optimalem Wirkungsgrad betrieben wird.

8. Vorschaltgerät nach Anspruch 6,
   **dadurch gekennzeichnet,**
   **daß** die Spannungszeitfläche (A1; A2; $A_{Soll}$) derart gewählt ist, daß der Leistungsübertrager (Ü) an der Sättigungsgrenze betrieben wird.

9. Vorschaltgerät nach einem der vorhergehenden Ansprüche,
**dadurch gekennzeichnet,**
**daß** das Vorschaltgerät zwei Schaltelemente (T1, T2) in Halbbrückenanordnung umfaßt.

10. Vorschaltgerät nach einem der Ansprüche 1 bis 8, **dadurch gekennzeichnet,**
**daß** das Vorschaltgerät vier Schaltelemente in Vollbrückenanordnung umfaßt.

11. Verfahren zum Betreiben eines Vorschaltgeräts für mindestens eine elektrische Glühlampe, wobei das Vorschaltgerät umfaßt mindestens zwei Schaltelemente (T1, T2), die unter Bildung eines ersten Verbindungspunkts (VP1) miteinander gekoppelt sind, eine Ansteuerschaltung (10) mit mindestens einem Ausgang zur Ansteuerung der mindestens zwei Schaltelemente (T1, T2) mit einem Ansteuersignal, das durch ein Tastverhältnis (d)
welches durch das Verhältnis einer Eischaltzeit (t1) eines der Schaltelemente (T1, T2) zur Summe von Einschaltzeiten (T) der Schaltelemente (T1, T2) definiert ist
und eine Schaltfrequenz ($f_S$) charakterisiert ist, und einem Eingang für ein Dimmsignal ($U_d$), sowie einen Leistungsübertrager (Ü), dessen Primärseite (L1) mit dem ersten Verbindungspunkt (VP1) gekoppelt ist, wobei an dessen Sekundärseite (L2) die mindestens eine elektrische Glühlampe (LA1, LA2) anschließbar ist, folgende Schritte umfassend:

a) Anlegen eines Dimmsignals ($U_d$) an den Eingang der Ansteuerschaltung (10);
b) Erzeugen eines Ansteuersignals mit der Ansteuerschaltung (10) in Abhängigkeit des Dimmsignals ($U_d$),

**dadurch gekennzeichnet daß** in Schritt b) das Ansteuersignal durch Variieren der Schaltfrequenz ($f_S$) und des Tastverhältnisses (d) in Abhängigkeit des Dimmsignals ($U_d$) erzeugt wird,
wobei bei einem Dimmsignal ($U_d$), das mit einer niedrigeren von dem Leistungsübertrager (Ü) zu übertragenden Leistung korreliert ist, die Schaltfrequenz ($f_S$) verringert wird im Vergleich zur Schaltfrequenz ($f_S$) bei einem Dimmsignal ($U_d$), das mit einer höheren von dem Leistungsübertrager zu übertragenden Leistung korreliert ist.

**Claims**

1. Ballast for at least one electric incandescent lamp, having

- at least two switching elements (T1, T2) that are coupled to one another with the formation of a first tie point (VP1),

- a drive circuit (10) with at least one output for driving the at least two switching elements (T1, T2) with the aid of a drive signal that is **characterized by** a pulse duty factor (d), which is defined by the ratio of a switch-on time (t1) of one of the switching elements (T1, T2) to the sum of switch-on times (T) of the switching elements (T1, T2), and by an operating frequency ($f_S$), and with an input for a dimming signal ($U_d$), and
- a power transformer (Ü) whose primary side (L1) is coupled to the first tie point (VP1), it being possible to connect the at least one electric incandescent lamp (LA1; LA2) to the secondary side (L1) thereof,

**characterized in that** the drive circuit (10) is designed to vary the pulse duty factor (d) and the operating frequency ($f_S$) of the drive signal as a function of the dimming signal ($U_d$),
and **in that** the drive circuit (10) is designed, in the event of a dimming signal ($U_d$) that is correlated with a relatively low power to be transmitted by the power transformer (Ü), to reduce the operating frequency ($f_S$) by comparison with the operating frequency ($f_S$) in the event of a dimming signal ($U_d$) that is correlated with a relatively high power to be transmitted by the power transformer.

2. Ballast according to Claim 1, **characterized in that** the drive circuit (10) is designed in the event of variation in the strobe signal (d) to continue to take account of the supply voltage ($U_Z$) for the two switching elements (T1, T2) and/or the current through the at least one incandescent lamp (LA1) and/or the voltage (U2) on the secondary side of the power transformer (Ü).

3. Ballast according to one of the preceding claims, **characterized in that** the drive circuit (10) is designed, in the event of a dimming signal ($U_d$) that is correlated with the maximum power to be transmitted by the power transformer (Ü), to generate a drive signal in the case of which the operating frequency ($f_S$) is a maximum and, in the event of a dimming signal ($U_d$) that is correlated with the minimum power to be transmitted by the power transformer (Ü), to generate a drive signal in the case of which the operating frequency ($f_S$) is a minimum.

4. Ballast according to one of the preceding claims, **characterized in that** the minimum operating frequency ($f_S$) of the drive signal is determined in such a way that saturation still does not occur in the power transformer (Ü).

5. Ballast according to one of the preceding claims, **characterized in that** the drive circuit (10) is designed to vary the operating frequency ($f_S$) of the drive signal as a function of the dimming signal ($U_d$) in a continuous stepwise fashion and/or in accordance with the partly linearized curve profile.

6. Ballast according to one of the preceding claims, **characterized in that** the drive circuit (10) is designed to reduce the operating frequency ($f_S$) of the drive signal in such a way that the voltage-time area (A1; A2; $A_{Des}$) at the power transformer (Ü) remains substantially constant.

7. Ballast according to Claim 6, **characterized in that** the voltage-time area (A1; A2; $A_{Des}$) is selected in such a way that the power transformer (Ü) is operated with optimum efficiency in the event of maximum power to be transmitted.

8. Ballast according to Claim 6, **characterized in that** the voltage-time area (A1; A2; $A_{Des}$) is selected in such a way that the power transformer (Ü) is operated at the saturation limit.

9. Ballast according to one of the preceding claims, **characterized in that** the ballast comprises two switching elements (T1, T2) in a half-bridge arrangement.

10. Ballast according to one of Claims 1 to 8, **characterized in that** the ballast comprises four switching elements in a full-bridge arrangement.

11. Method for operating a ballast for at least one electric incandescent lamp, in which the ballast comprises at least two switching elements (T1, T2) that are coupled to one another with the formation of a first tie point (VP1), a drive circuit (10) with at least one output for driving the at least two switching elements (T1, T2) with the aid of a drive signal that is **characterized by** a pulse duty factor (d), which is defined by the ratio of a switch-on time (t1) of one of the switching elements (T1,T2) to the sum of switch-on times (T) of the switching elements (T1,T2), and by an operating frequency ($f_S$), and with an input for a dimming signal ($U_d$), and a power transformer (Ü) whose primary side (L1) is coupled to the first tie point (VP1), it being possible to connect the at least one electric incandescent lamp (LA1, LA2) to the secondary side (L2), comprising the following steps:

    a) applying a dimming signal ($U_d$) to the input of the drive circuit (10);
    b) generating a drive signal with the aid of the drive circuit (10) as a function of the dimming signal ($U_d$),

**characterized in that** in step b) the drive signal is generated by varying the operating frequency ($f_S$) and the pulse duty factor (d) as a function of the dimming signal ($U_d$),

in which in the event of a dimming signal ($U_d$) that is correlated with a relatively low power to be transmitted by the power transformer (Ü), the operating frequency ($f_S$) is reduced by comparison with the operating frequency ($f_S$) in the event of a dimming signal ($U_d$) that is correlated with a relatively high power to be transmitted by the power transformer.

## Revendications

1. Ballast pour au moins une lampe électrique à incandescence comprenant

    - au moins deux éléments (T1, T2) de commutation qui sont couplés l'un à l'autre en formant un premier point (VP1) de liaison,
    - un circuit (10) de commande,
    ayant au moins une sortie pour commander les au moins deux éléments (T1, T2) de commutation par un signal de commande qui est **caractérisé**
    **par** un rapport (d) de cycle
    qui est défini par le rapport d'une durée (t1) de fonctionnement de l'un des éléments (T1, T2) de commutation à la somme des durées (T) de fonctionnement des éléments (T1, T2) de commutation,
    et par une fréquence ($f_S$) de commutation,
    et une entrée pour un signal ($U_d$) d'atténuation, et
    - un transformateur (Ü) de puissance dont le côté (L1) primaire est couplé au premier point (VP1) de liaison, la au moins une lampe (LA1 ; LA2) électrique à incandescence pouvant être raccordée à son côté (L2) secondaire,

    **caractérisé**
    **en ce que** le circuit (10) de commande est conçu pour faire varier le rapport (d) de cycle et la fréquence ($f_S$) de commutation du signal de commande en fonction du signal ($U_d$) d'atténuation,
    et **en ce que** le circuit (10) de commande est conçu, pour diminuer, pour un signal ($U_d$) d'atténuation qui est corrélé à une puissance assez petite à transformer par le transformateur (Ü) de puissance, la fréquence ($f_S$) de commutation par rapport à la fréquence ($f_S$) de commutation pour un signal ($U_d$) d'atténuation qui est corrélé à une puissance plus grande à transformer par le transformateur de puissance.

2. Ballast suivant la revendication 1, **caractérisé**
    **en ce que** le circuit (10) de commande est conçu pour tenir compte, lors de la variation du signal (d) de cycle, en outre de la tension ($U_Z$) d'alimentation des deux éléments (T1, T2) de commutation et/ou du courant passant dans la au moins une lampe (LA1) à incandescence et/ou de la tension (U2) du côté secondaire du transformateur (Ü) de puissance.

3. Ballast suivant l'une des revendications précédentes,
**caractérisé**
**en ce que** le circuit (10) de commande est conçu pour produire, pour un signal ($U_d$) d'atténuation qui est corrélé à la puissance maximum à transformer par le transformateur (Ü) de puissance, un signal de commande dans lequel la fréquence ($f_S$) de commutation est maximum et pour produire, pour un signal ($U_d$) d'atténuation qui est corrélé à la puissance minimum à transformer par le transformateur (Ü) de puissance, un signal de commande dans lequel la fréquence ($F_S$) de commutation est minimum.

4. Ballast suivant l'une des revendications précédentes,
**caractérisé**
**en ce que** la fréquence ($f_S$) minimum de commutation du signal de commande est telle qu'il ne se produit pas encore de saturation dans le transformateur (Ü) de puissance.

5. Ballast suivant l'une des revendications précédentes,
**caractérisé**
**en ce que** le circuit (10) de commande est conçu pour faire varier la fréquence ($f_S$) de commutation du signal de commande en fonction du signal ($U_d$) d'atténuation d'une manière continue pas à pas et/ou suivant une courbe linéarisée par tronçon.

6. Ballast suivant l'une des revendications précédentes,
**caractérisé**
**en ce que** le circuit (10) de commande est conçu pour diminuer la fréquence ($f_S$) de commutation du signal de commande de façon à ce que la surface (A1; A2; $A_{soll}$) de tension temps au transformateur (Ü) de puissance reste sensiblement constante.

7. Ballast suivant la revendication 6,
**caractérisé**
**en ce que** la surface (A1; A2; $A_{soll}$) de tension temps est choisie de façon à ce que le transformateur (Ü) de puissance fonctionne à une puissance maximum à transformer au rendement le meilleur.

8. Ballast suivant la revendication 6,
**caractérisé**
**en ce que** la surface (A1; A2; $A_{soll}$) de tension temps est choisie de façon à ce que le transformateur (Ü) de puissance fonctionne à la limite de saturation.

9. Ballast suivant l'une des revendications précédentes,
**caractérisé**
**en ce que** le ballast comprend deux éléments (T1, T2) de commutation suivant un agencement en demi pont.

10. Ballast suivant l'une des revendications 1 à 8,
**caractérisé**
**en ce que** le ballast comprend quatre éléments de commutation suivant un agencement en pont complet.

11. Procédé pour faire fonctionner un ballast pour au moins une lampe électrique à incandescence, dans lequel le ballast comprend au moins deux éléments (T1, T2) de commutation qui sont couplés entre eux en formant un premier point (VP1) de liaison, un circuit (10) de commande ayant au moins une sortie pour commander les au moins deux éléments (T1, T2) de commutation par un signal de commande qui est **caractérisé par** un rapport (d) de cycle, qui est défini par le rapport d'une durée (t1) de fonctionnement de l'un des éléments (T1, T2) de commutation à la somme des durées (T) de fonctionnement des éléments (T1, T2) de commutation, et par une fréquence ($f_S$) de commutation, et une entrée pour un signal ($U_d$) d'atténuation, et un transformateur (Ü) de puissance dont le côté (L1) primaire est couplé au premier point (VP1) de liaison, la au moins une lampe (LA1; LA2) électrique à incandescence pouvant être raccordée à son côté (L2) secondaire, comprenant les stades suivants :

a) application d'un signal ($U_d$) d'atténuation à l'entrée du circuit (10) de commande ;
b) production d'un signal de commande par le circuit (10) de commande en fonction du signal ($U_d$) d'atténuation,

**caractérisé**
**en ce qu'**au stade b) on produit le signal de commande en faisant varier la fréquence ($f_S$) de commutation et le rapport (d) de cycle en fonction du signal ($U_d$) d'atténuation, dans lequel pour un signal ($U_d$) d'atténuation qui est corrélé à une puissance assez petite à transformer par le transformateur (Ü) de puissance, on diminue la fréquence ($f_S$) de commutation par rapport à la fréquence ($f_S$) de commutation pour un signal ($U_d$) d'atténuation qui est corrélé à une puissance plus grande à transformer par le transformateur de puissance.

**FIG. 1**

**FIG. 2**

**FIG. 3**